# EUROPÄISCHE PATENTSCHRIFT

(11) **EP 0 669 214 B1**
(45) Veröffentlichungstag und Bekanntmachung des Hinweises auf die Patenterteilung: **27.10.1999**
(21) Anmeldenummer: 95102813.3
(22) Anmeldetag: 19.05.1990
(51) Int. Cl.: B42D 15/02, B42D 15/10

(54) **Verfahren zum Aufbringen und Versiegeln von Informationen auf kartenförmigen Informationsträgern**
Method of applying and sealing of information on an information carrier in the form of a card
Méthode pour l'application et le scellement de renseignements sur un support d'informations en forme de carte

(30) Priorität: 23.05.1989 DE 3916708
(43) Veröffentlichungstag der Anmeldung: 30.08.1995
(62) Teilanmeldung aus: 90109525.7
(73) Patentinhaber: Vogt, Werner, CH-5453 Remetschwil (CH)
(72) Erfinder: Vogt, Werner, CH-5453 Remetschwil (CH)
(74) Vertreter: Otte, Peter, Dipl.-Ing.

(56) Entgegenhaltungen:
- EP-A- 0 195 104
- EP-A- 0 232 709
- EP-A- 0 256 168
- EP-A- 0 273 348
- EP-A- 0 292 109
- GB-A- 2 118 898
- US-A- 3 871 119
- US-A- 4 464 454

## Beschreibung

### Stand der Technik

Die Erfindung betrifft ein verfahren zum Aufbringen und Versiegeln von Daten, Informationen, Bildern u.dgl. auf kartenförmigen Informationsträgern, insbesondere Kreditkarten u.dgl. nach dem Oberbegriff des Anspruchs 1.

Bei einem bekannten Verfahren dieser Art (EP-A-0 273 348) wird zur Herstellung einer hochsicheren, monolithischen Identifikationskarte Farbe auf ein Farbe aufnehmendes Element der Karte mit Hilfe eines thermischen Druckverfahrens übertragen. Hierzu wird so vorgegangen, daß ein elektronisch von einer Farbvideokamera erzeugtes Bild dem Druckvorgang zugrunde gelegt wird, wobei zunächst die entsprechenden Farb anteile des Bildes in elektrische Signale umgewandelt und anschließend diese Signale einem Thermodrucker zugeführt werden. Der thermische Druckkopf überträgt dann aufgrund der ihm zugeführten Cyan-, Magenta- und Gelb-Signale das Farbbild auf das von einer Unterlage getragene farbaufnehmende Element. Die so gebildete Schicht der Karte kann dann mit weiteren Kartenschichten laminiert werden, wobei in dieser Veröffentlichung auf die Verwendung von Klebmitteln für das Laminieren von thermischen Druckelementen hingewiesen wird.

Bei einem weiteren bekannten Verfahren zur Herstellung hochfälschungssicherer Identifikationskarten (US-A-4 687 526 bzw. die entsprechende EP-0 232 709 A1) wird mit Hilfe einer Videokamera ein fotografisches Abbild gewonnen und zusammen mit zusätzlichen digitalen Daten so verarbeitet, daß sich auf einem Bildschirm eine Darstellung der gewünschten Kartenbeschriftung mit Abbildung ergibt. Die gesamte Darstellung gelangt anschließend zu einem Laserdrucker, der das Portrait und sonstige gewünschte alphanumerische Informationen auf einem Papierblatt ausdruckt. Anschließend wird das Papierblatt dann laminiert, indem es zwischen zwei Schichten eines transparenten thermoplastischen Materials gelegt und unter Einwirkung von Wärme und Druck mit einer solchen Temperatur und einem solchen Druck verarbeitet wird, daß das Kunststoffmaterial in die Zwischenräume zwischen die Papierfasern eindringt, so daß sich eine einheitliche Struktur ergibt, die nicht mehr ohne Zerstörung der Identifikationsdaten getrennt werden kann.

Dieses bekannte Verfahren resultiert aus den Schwierigkeiten, die sich bei dem Versuch ergeben, insbesondere fotografische Abbilder bei einer Identifikationskarte so zu integrieren, daß sich eine nachträgliche Fälschung oder ein Auftrennen der Laminatschichten als unmöglich erweist. So ist es bei der Herstellung kartenförmiger Ausweise, beispielsweise in der Form von Scheckkarten, bekannt, diese aus einem Vollkunststofflaminat aufzubauen, wobei die einzelnen Schichten oder Laminate, die überwiegend aus PVC oder gegebenenfalls auch aus einem anderen geeigneten Kunststoffmaterial bestehen können, übereinander gestapelt werden einschließlich eines dazwischen gelegten Abbilds des zukünftigen Trägers und durch Druck und Wärmeeinwirkung verbunden werden. Dies führt jedoch, wie auch bei dem bekannten eingangs genannten Verfahren zu erwarten ist, lediglich zu einer Randkantenversiegelung, da bei einer zwischen Kunststoffschichten eingelegten Papierschicht entweder, wenn die beidseitig der Papierschicht angeordneten Kunststoffschichten sich nicht nach dem Laminieren oder Verschweißen berühren, ein Trennen innerhalb der Papierschicht möglich ist oder dann, wenn die Kunststoffschichten die Papierschicht vollständig durchdringen, also nicht nur Faserzwischenräume besetzen, ein Zerstören der Papierschicht einschließlich der von dieser getragenen Daten zu erwarten ist. Daher hat sich das Anbringen von Informationen, auch allein als Beschriftung oder zusammen mit Bildern, Magnetstreifen oder sonstigen, gegebenenfalls auch nur maschinenlesbaren Codierungen (Infrarot-Helldunkel-Maskierung) bei solchen Karten stets im gewissen Maße als problematisch erwiesen.

Ferner ist es bekannt (US-A-4,132,350), eine magnetische Karte aus verschiedenen Laminatschichten, Datenschichten oder einer transparenten Kunststoffschicht zusammenzusetzen. Im einzelnen besteht diese magnetische Karte aus mindestens einer Oberflächenschicht eines thermoplastischen Kunstharzes und einer magnetischen Schicht, die sich über mindestens einen Teil der Kunstharzschicht erstreckt. Über der magnetischen Schicht befindet sich eine Farbschicht, auf welcher dann wieder eine Musterschicht aufgebracht ist. Auf diese Weise ist die Farbschicht in der Lage, das unschöne Aussehen der Magnetschicht zu verdecken, wobei die Musterschicht dennoch durch das Vorhandensein der Magnetschicht nicht gestört ist, eben weil sich zwischen diesen beiden Schichten die zusätzliche Farbschicht befindet. Auf diese Weise läßt sich das Aussehen einer solchen Karte wesentlich verbessern.

Allgemein ergeben sich bei beschrifteten Karten eine Vielzahl von Nachteilen hinsichtlich der bisher bekannten angewendeten Beschriftungsverfahren, die etwa Druckverfahren, die Verwendung sogenannter Matrixprinter oder auch die Möglichkeit umfassen, ein sogenanntes "hot Stamping Tape" zu verwenden, wobei die Beschriftung gegebenenfalls auch pünktchenweise, ähnlich einem Siebdruckverfahren aufgebracht werden kann. Alle diese Beschriftungsmöglichkeiten haben den Nachteil, daß sie sich im Endeffekt abtragen, also nicht, jedenfalls nicht im geforderten Maße, abriebfest sind, auch dann nicht, wenn schnellantrocknende oder verdunstende Tintenflüssigkeiten o.dgl. verwendet werden.

Die Beschriftung während des Herstellungsvorgangs vorzunehmen ist ungünstig, weil diese von außen an der endgefertigten Karte visuell wahrnehmbar sein soll, so daß eine Beschriftung nur auf der obersten Schicht angebracht werden kann, es sei denn, daß transparente Deckschichten vorgesehen sind. In diesem Fall müssen aber mittlere Schichten schon die fertige Beschriftung aufweisen, und diese ist zu diesem Zeitpunkt des Zusammenstellens des Kartenlaminats unter Umständen noch nicht verfügbar, weil man nicht weiß, welcher Person diese Karte später zuzuordnen ist. Außerdem müßte dann die Endausfertigung der Ausweis- oder Kreditkarten beim Kartenhersteller erfolgen und nicht, wie aus Vereinfachungs- und Kostengründen erwünscht, beim Ausgeber der Karten. Dabei erfordert die Endfertigung der Karte beim Hersteller auch noch die Überführung sämtlicher Daten der jeweiligen Karteninhaber vom Ausgeber an den Hersteller.

Bei einem weiteren bekannten Verfahren zur Herstellung einer Karte, beispielsweise Identifikationskarte (FR-A-2 435 357) wird auf eine Trägerschicht als Polyvinylchlorid (PVC) eine lichtempfindliche Schicht oder Fotoschicht aufgebracht. Diese Fotoschicht besteht selbst wieder aus einer aufeinanderfolgenden Schichtung einer ersten Polyesterschicht, einer sich an diese anschließenden Ablöseschicht, der eigentlich fotoempfindlichen Schicht, die eine Dicke von lediglich einigen µ aufweist und daher der Fotoemulsion entspricht, einer sich an diese anschließenden Klebschicht und einer unteren, beispielsweise aus einem in bestimmter Weise behandelten Papier bestehenden Schutzschicht. Von wesentlicherer Bedeutung bei diesem bekannten Verfahren ist, daß die Emulsionsschicht nicht belichtet und in ihrer Empfindlichkeit so eingestellt ist, daß eine Belichtung nur mit einer besonders starken und intensiven Lichtquelle erfolgt, während normales Umgebungslicht nur wenig Einfluß hat.

Bei der Herstellung wird so vorgegangen, daß zunächst die untere Schutzschicht abgezogen und die verbleibende Schichtung mit der Filmemulsion auf die PVC-Trägerschicht aufgepreßt wird, auf welcher sie aufgrund der weiter vorn erwähnten Klebschicht haftet. Anschließend wird, erleichtert durch die Ablöse-Zwischenschicht der eigentlichen Emulsion und der ersten Polyesterschicht diese ebenfalls abgezogen und die insoweit vor-bereitete Karte mit der unbelichteten und auch nicht mehr abgedeckten Filmemulsion gelangt dann aus einem Magazin zu einer Belichtungsstation, wo die Belichtung unter Einwirkung einer starken ultravioletten Strahlung durchgeführt wird. Es schließen sich dann eine Anzahl von Entwicklungs-, Bürst-, Spül- und Trockungsschritte an, wobei die jeweilige Karte mit Hilfe von reversierbaren Schlitten in die einzelnen Bäder und Behandlungsstationen überführt wird. An einer letzten Station wird dann auf die noch immer freiliegende, jetzt allerdings entwickelte Emulsionsschicht eine Polyesterschutzschicht durch Heißpressung aufgebracht; es ist allerdings nicht auszuschließen, daß sich hier bzw. bei späterem Gebrauch einer solchen Identifikationskarte Schwierigkeiten dadurch ergeben, daß die Verbindung der zuletzt aufgebrachten Polyesterschicht mit dem restlichen Kartenmaterial nicht ausreichend ist, da Polyester, wie bekannt, durch Heißpressung nicht zu einer hinreichenden Haftung gebracht werden kann.

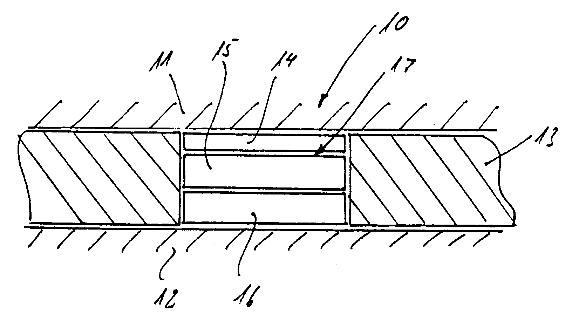

Problematisch ist ferner die Vorbereitung der Karte, bei welcher von der die Emulsionsschicht umfassenden Fotoschicht zunächst zwei Schichten abgezogen werden müssen und bei einem Zwischenschritt die Verklebung mit der PVC-Trägerschicht zu erfolgen hat, alles bei unbelichteter und daher entsprechend empfindlicher Emulsion. Ferner ist nicht auszuschließen, daß der gesamte Belichtungs- und Entwicklungsaufwand, der während der Kartenherstellung getrieben werden muß - erst durch das Aufbringen der letzten Polyesterscnicht ist die Identifikationskarte fertig und die Emulsionsschicht abgedeckt - Beschädigungen an der soeben belichteten Emulsionsschicht auftreten können oder diese sich in den einzelnen nen Bädern, Bürst- und Trocknungsstationen ganz oder teilweise ablöst. Der Herstellungsaufwand einer solchen Identifikationskarte ist insgesamt erheblich. Ferner darf bei dieser bekannten Identifikationskarte davon ausgegangen werden, daß eine farbige Gestaltung der durch die ultraviolette Belichtung gewonnenen Abbildung ausgeschlossen ist, denn die Entwicklung eines Farbbildes erfordert eine wesentlich größere Anzahl von Bädern und Zwischenschritten, als bei dieser Art der nachträglichen Belichtung und Entwicklung im Hinblick auf die Stabilität und Haftung der Emulsion noch erträglich ist. Außerdem kann durch eine ausschließlich ultraviolette Belichtung eine für das Normalauge zufriedenstellende Farbzusammenstellung der Abbildung nicht erzielt werden.

Als weiteren Nachteil muß schließlich noch der Umstand angesehen werden, daß sich die nachträgliche Belichtung der Fotoemulsion, nämlich nachdem diese auf den PVC-Träger aufgeklebt ist, nur schlecht und unter Qualitätseinbußen vornehmen läßt, allein schon deshalb, weil die stets notwendige Klebschicht unter praktischen Bedingungen nicht so einwandfrei gleichmäßig aufgebracht werden kann, daß Verfälschungen des Aufnahmevorganges durch diese mit Sicherheit vermeidbar sind.

Ferner ist bei der Herstellung eines kartenförmigen Informationsträgers die Verwendung eines Zwischen- oder Hilfsträgers in Form einer planaren Unterlage bekannt (US-A-4 132 350), dieser Zwischenträger dient jedoch als Zwischenlagerung für den Aufbau verschiedener Schichten bei der Herstellung einer Magnetkarte und wird dann während des Herstellungsprozesses vom Verbund der Kunststoffschichten wieder abgetrennt. Im einzelnen wird dabei so vorgegangen, daß auf die planare Unterlage zunächst eine Kunstharzschutzschicht, dann eine ein Muster aufweisende Schicht, eine Farbschicht und die aus einem magnetischen pulverförmigen Material bestehende Magnetschicht sowie schließlich ein Bindemittel aus einem thermoplastischen Kunstharz aufgebracht wird, so daß man ein erstes Laminat erhält. Anschließend wird die Magnetschicht dieses ersten Laminats mit einem ersten Deckblatt eines thermoplastischen Kunstharzes in Kontakt gebracht, es erfolgt eine Verbindung unter Wärme- und Druckeinwirkung, um das Laminat zu befestigen und anschließend wird die planare Unterlage wieder abgezogen. Bezüge zu vorliegender Erfindung bestehen nicht, da diese planare Unterlage in Form eines Hilfsträgers nicht mit einer fotographischen Emulsion verbunden und auch nicht entsprechend vorbereitet wird; schließlich erfolgt auch keine Belichtung oder Entwicklung auf dem Hilfsträger.

Allgemein sind kartenförmige Informationsträger bekannt (US-A-3 871 119), die aus mehreren miteinander zu einem Block verbundenen Kunststoffschichten bestehen, von denen mindestens eine ein Bild eines Benutzers der Karte enthaltende fotographische Schicht ist. Hergestellt wird ein solcher kartenförmiger Informationsträger, beispielsweise eine Führerscheinkarte,dadurch, daß man auf eine PVC-Unterlage unter Zwischenfügen eines geeigneten Klebstoffs einen anderweitig entwickelten Film, der für sich gesehen wie bekannt aus dem eigentlichen Filmträger und der das eigentliche Abbild enthaltenden Emulsionsschicht besteht, mittels geheizter Walzen aufbringt und anklebt. Auf diese Weise ergibt sich im Endeffekt, daß die fotographische Schicht in diesem Informationsträger lediglich von einer fertig belichteten, entwickelten, fixierten und getrockneten Emulsion geringerer Dicke gebildet ist, die auf beiden Seiten mit angrenzenden Kunststoffschichten verbunden ist, wobei natürlich die auf der Emulsionsrückseite befindliche Kunststoffschicht die Filmträgerschicht ist, mit der sie von Anfang an schon verbunden gewesen ist. Die Dicke des fotographischen Films, vorzugsweise Farbfilms, der auf diese Weise vorzugsweise beidseitig mit PVC-Trägerschichten verbunden wird, ist in dieser Veröffentlichung zu 9 mils angegeben, was der üblichen Dicke eines fotographischen Films aus Träger und Emulsion von etwa 228 µ entspricht. Die reine Emulsionsschicht ist, wie bekannt, um mindestens eine Größenordnung dünner. Interessant ist bei dieser Veröffentlichung (US-A-3 871 119), daß die Klebstoffprobleme, wenn man Filmschichten mit Kunststoffschichten verbinden will, ausführlich behandelt werden und daher bezieht sich diese Veröffentlichung im wesentlichen auch auf spezielle Klebstoffarten, die beim Aufbau solcher aus Kunststoff-schichten bestehender Informationsträger Verwendung finden können.

Ferner ist es allgemein bei der Herstellung von ein fotographisches Abbild des Benutzers oder Trägers aufweisenden Identifikationskarten bekannt, eine mittlere Folie oder Schichtung im Format des einzubringenden Bildausschnittes auszustanzen und anschließend ein fertiges Foto in den ausgestanzten Bereich einzulegen. Anschließend werden beidseitig weitere Schichten und Folien angeordnet und es erfolgt die Verbindung dieser Kunststoffschichten über Klebmittel und/oder Druckund Wärmeeinwirkung. Dabei muß mindestens dort, wo sich das eingelegte Foto, welches selbst wieder aus einer zusammengesetzten Schichtung aus Träger und Emulsion besteht, befindet, ein zusätzlicher Kleber mit Bezug auf die abdeckende Kunststoffschicht aufgebracht werden, damit eine hinreichende Verbindung an dieser Stelle sichergestellt ist und nicht durch ein- oder zweimaliges Biegen der Identifikationskarte Ablöseerscheinungen und Blasen genau an der Stelle auftreten, wo sich das foto mit der Abbildung des Trägers und/oder sonstigen Informationen und Daten befindet.

Problematisch ist daher bei allen Ausweisen oder Identifikationskarten, die ein Bild oder jedenfalls eine fotographische Schicht enthalten oder aufnehmen der Umstand, daß solche Bilder nur auf einer Materialbasis erhältlich sind, die mit dem Material der Ausweise nicht verbindbar ist. Im Normalfall werden gängige Papierbilder, beispielsweise Polaroidfotos verwendet, wobei das Papierbild an seiner Oberfläche keine Verbindung mit den abdeckenden Kunststoffschichten eingeht; auch wenn man einen Kleber aufbringt, verbindet sich dann lediglich die Fotoemulsion des Papierbildes mit dem Kleber und würde bei einem willkürlichen Öffnen der Identifikationskarte, wie dies zu Fälschungsabsichten nicht ausgeschlossen ist, dann wegreißen; hier ergeben sich Sicherheitsaspekte, die nicht unbeachtet bleiben können; außerdem führen die bekannten Maßnahmen allgemein zu Qualitätseinbußen bei solchen Identifikationskarten, da diese aus verschiedneen Materialien bestehen. Ein Musterbeispiel für die Herstellung solcher Identifikationskarten ist beispielsweise in der US-A-4 101 701 beschrieben, in welcher auch geeignete Kleb- und Haftungsmittel angegeben sind, um die Verbindung der einzelnen Kunststoffschichten mit dem eingelegten Polaroidfoto vornehmen zu können.

Aufgrund dieses bekannten Stands der Technik ergibt sich daher die Problemstellung, wie man Daten und Abbildungen, beispielsweise die Darstellung der Gesichtsform eines Trägers, in einer beliebigen Identifikationskarte ohne größeren Aufwand anbringen kann, wobei insbesondere auch die Fälschungssicherheit im Vordergrund steht.

Identifikationskarten können als persönlicher Ausweis ausgebildet sein, der beispielsweise einer bestimmten Person den Zugang zu einem nicht öffentlichen Areal ermöglicht, oder als unpersönlicher Ausweis, der beispielsweise den jeweiligen Besitzer zum Bezug einer Dienstleistung oder einer Ware berechtigt. Die Ausführung der Karte und die zum Identifizieren des Inhabers verwendeten Mittel können sehr unterschiedlich sein und sich im allgemeinen von der vorgesehenen Verwendung abhängig. Übertragbare Kundenkarten von Kaufhäusern oder Kreditorganisationen bestehen einfacherweise aus einer einzigen Kunststoffschicht, auf der der Name des Herausgebers aufgedruckt und der Name des Inhabers sowie eine individuelle Kennzahl eingeprägt sind. Persönliche Ausweise bestehen demgegenüber aus einem Kunststofflaminat mit einer Schicht, auf der für das menschliche Auge sichtbare Informationen im Klartext aufgetragen sein können und die gegebenenfalls, wie schon erwähnt, ein Fenster zum Einlegen einer Fotographie aufweist. Ferner können für das menschliche Auge nicht sichtbare, jedenfalls nicht verständliche kodierte, maschinenlesbare Informationen, etwa für IR-Strahlung, vorgesehen und gegebenenfalls auf einer weiteren Schicht angeordnet sein.

Es versteht sich, daß die Herstellung einer Identifikationskarte umso aufwendiger ist, je mehr Informationen auf der Karte angeordnet sind. Das gilt insbesondere für die Schicht mit den für das menschliche Auge sichtbaren und im Klartext aufgetragenen Informationen, die gewöhnlich den Namen des Ausgebers, die Bezeichnung des Bereichs, in dem die Karte gültig ist, eine oder mehrere Kennzahlen, den Namen und gegebenenfalls auch die Unterschrift des Inhabers sowie dessen Fotografie umfassen. Dabei können nur allgemeine und auf vielen Karten gleichartige Informationen, beispielsweise der Name des Herausgebers oder der Gültigkeitsbereich maschinell aufgebracht werden, während die den Inhaber betreffenden Informationen mehrere unterschiedliche, manuell und einzeln durchzuführende Arbeitsgänge erfordert.

Es ergibt sich daher für die vorliegende Erfindung die Aufgabe, ein Herstellungsverfahren für Karten beliebiger Art, beispielsweise Identifikationskarten, Scheckkarten u. dgl. zu schaffen, welches gegenüber dem bekannten Verfahren erheblich vereinfacht ist, eine hohe Qualität des vorzugsweise farbige Abbildungen und/oder Daten und Informationen enthaltenden Endproduktes sicherstellt und dafür sorgt, daß die Karte auch hinreichend fälschungssicher ist.

### Vorteile der Erfindung

Das erfindungsgemäße Verfahren löst diese Aufgabe mit den kennzeichnenden Merkmalen des Anspruchs 1 und hat den Vorteil, daß Informationen, also Bild und andere Variablen, Daten, die mittels eines Videosystems aufgenommen oder in einem entsprechenden, mit dem Videosystem zusammenarbeitenden Personalcomputer (PC) oder sonstigen Rechner eingegeben worden sind, direkt von einem Videoprinter ausgedruckt werden, und zwar bevorzugt direkt auf PVC (Polyvinylchlorid), dem bevorzugten Kunststoffmaterial für die Herstellung von Karten oder Informationsträgern, obwohl es sich versteht, daß hierfür auch viele andere geeignete Kunststoffe in Frage kommen z.B. Polyester. Wenn daher im folgenden von PVC als Kunststoffmaterial die Rece ist, kann dieses auch durch ein beliebiges anderes Kunststoffmaterial ersetzt sein - die Bezeichnung PVC steht somit stellvertretend für sonstige Materialien.

Bedruckt man beispielsweise eine PVC-Folie in dieser Art mit einem Viceoprinter und verschweißt die Folie anschließend mit der Grundkartenform, dann erfüllt sich sozusagen der Traum eines Ausweisherstellers, daß nämlich eine der PVC-Laminatschichcen des Ausweises gleichzeitig der Datenträger für Bild und sonstige variable Informationen ist, so daß sich das Auftreten von "Fremdkörpern" in der Karte vermeiden läßt.

Der Ausdruck der Daten kann in einer Ausgestaltung der Erfindung auch auf einer besonders dünnen (beispielsweise nur 10 my betragenden) Empfängerschicht erfolgen, die auch als Receiver-/Releaseschicht bezeichnet werden kann. Eine solche Schicht ist dann üblicherweise auf einem Verarbeitungsträger (beispielsweise Papier mit einer Dicke von ebenfalls beispielsweise ca. 0,2 mm) aufgebracht.

Dabei ist ferner vorteilhaft, daß der Ausdruck durch den Videoprinter auf einer später äußeren Schicht der fertigen Karte erfolgen kann, worauf noch eingegangen wird; es wird aber auch mit Vorteil möglich, eine innere opake, beispielsweise weiße Schicht im Kartenlaminat der PVC-Schichten zu verwenden und auf diese den Ausdruck mittels Videoprinter aufzubringen.

Schließlich ist in einer Ausgestaltung der Erfindung vorteilhaft, daß auch auf eine fertige Karte gedruckt werden kann. Stehen Abriebkriterien nicht im Vordergrund, dann kann man die Karte entweder so belassen oder zum Schutz eine Deckschicht noch auftragen.

Es soll nicht verkannt werden, daß der direkte Druck auf eine PVC-Schicht schwierig sein kann, daher besteht eine Ausgestaltung vorliegender Erfindung darin, die zu bedruckende PVC-Schicht mittels einer Empfänger- oder Receiverschicht vorzubereiten. Eine solche Receiver-Beschichtung kann in dem zu bedruckenden Bereich mittels bekannter geeigneter Druckverfahren, beispielsweise Siebdruck oder Offsetdruck aufgebracht werden und dient dann selbst wieder als von dem Videoprinter zu bedruckende Zwischenunterlage.

Wird demgegenüber wie weiter vorn schon erwähnt eine auf einem weiteren Verarbeitungsträger aufgebrachte dünne Receiverschicht für das Aufdrucken verwendet, dann wird diese Receiverschicht von dem Bearbeitungsträger (Papier) später wieder abgezogen und in die Karte integriert, beispielsweise so, wie dies in den US-Patenten 4 464 454 bzw. 4 635 965 (Photostrip-Verfahren) beschrieben ist.

Erfolgt die Vorbereitung der PVC-Schicht für das Videoprintverfahren durch Aufbringen einer Empfängerschioht, die ebenfalls aufgedruckt wird, wie erwähnt mittels Siebdruck oder Offsetdruck, dann kann diese Empfänger- oder Receiver-Beschichtung im zu bedruckenden Bereich (durch Siebdruck oder Offsetdruck oder durch andere Verfahren) erfolgen; die Erfindung umfaßt aber auch die Möglichkeit, nicht insofern partiell zu beschichten, sondern bei Auswahl eines geeigneten, auch eine Verschweißung in den Randbereichen problemlos ermöglichenden Receiver-Zwischenschichtmittels diese Zwischenschicht großflächig aufzubringen, was den Verzicht auf entsprechende Maskenformen ermöglicht und,-gegebenenfalls auch auf größeren Bögen-vollflächig zunächst die Empfängerschicht aufzubringen und dann mit dem Videoprinter die Daten auszudrucken, vorausgesetzt, daß diese Empfängerschicht eine einwandfreie Verbindung und Verschweißung der die Karte bildenden PVC-Schichten ermöglicht.

Schließlich besteht eine bevorzugte letzte Ausführungsform vorliegender Erfindung darin, daß auf eine bereits auf Endmaß gestanzte, also insofern fertige Karte (beispielsweise DIN-Karte, Kreditkarte u. dgl.) Bild und Text als eine Art "Unterlaminat" verschweißt werden, indem auf eine in diesem Fall transparente, dünne PVC-Folie spiegelverkehrt das Layout von einem Videoprinter ausgedruckt wird, wobei diese transparente dünne PVC-Folie ebenfalls das Endmaß schon aufweisen kann. Diese bedruckte PVC-Folie wird dann umgekehrt auf die gestanzte Karte aufgelegt und alles zusammen verschweißt. Die "Beschriftung" befindet sich dann im Inneren zwischen den beiden Schichten, wobei die dünne PVC-Folie mit der spiegelverkehrten Videoprinter-Beschriftung mit ihrer Rückseite sozusagen gleichzeitig auch noch die Deckfolie der Karte bildet.

Hierdurch ergibt sich der doppelte Vorteil, daß diese PVC-Folie einerseits gleichzeitig Datenträger und andererseits gleichzeitig Deckfolie ist, so daß diese beiden Elemente, da sie einstückig von einem einheitlichen PVC-Folienstreifen gebildet sind, bei hierdurch bewirkter erhöhter Fälschungssicherheit gar nicht mehr getrennt werden können.

Vorteilhaft ist ferner, daß die bedruckte transparente dünne PVC-Folie, die den spiegelverkehrten Aufdruck trägt, selbst schon Kartenendmaß aufweisen kann und in einer entsprechenden Form mit der ebenfalls auf Endmaß gestanzten Karte verbunden wird.

Schließlich ist es möglich, die dünne, z.B. ein aufgedrucktes Photo tragende PVC-Folie mit kleineren Abmessungen, z.B. nur mit den Abmessungen des Photos normal oder spiegelbildlich aufzuschweißen. Da sie so dünn ist, trägt sie randseitig nicht auf, zumal man die Heißpreßplatte mit entsprechend verringerten Abmessungen, die z.B. schon vorhandene Peliefdaten der Karte freiläßt, mit einem Linienmuster versehen kann.

### Zeichnung

Die Zeichnung zeigt schematisiert im Querschnitt eine Schweißform mit eingelegten Kartenbestandteilen und Druckausgleichsschicht zur Kartenherstellung einer Karte mit Unterlaminat von Bild und Daten als eine mögliche Lösungsvariante der Erfindung.

### Beschreibung der Ausführungsbeispiele

Der Grundgedanke vorliegender Erfindung besteht darin, auf eine Datenträgerschicht die für eine Karte erforderlichen Daten, Informationen, Abbildungen, Fingerabdrücke u. dgl. mit Hilfe eines Videoprinter-Druckverfahrens aufzubringen, wobei direkt auf PVC gedruckt wird.

Hierzu kann so vorgegangen werden, daß neben dem unmittelbaren Ausdruck auf eine an der Laminatbildung der Karte beteiligte PVC-Schicht dann, wenn sich für den direkten Videoprinter-Druck Schwierigkeiten ergeben, zunächst eine Zwischenbeschichtung gewählt wird, die etwa nach Art eines "Lacks" partiell oder vollflächig auf eine PVC-Schicht aufgebracht wird, und zwar hier wiederum mit besonderem Vorteil mittels eines Druckverfahrens (Siebdruck oder Offsetdruck o. dgl.). Die vollständige Beschichtung, auch bei größeren PVC-Bögen mit einer solchen Zwischen-Empfängerdruckschicht erfolgt dann, wenn diese Empfängerschicht ein Verschweißen der beteiligten PVC-Laminate möglich macht bzw. dem durch Wärmeeinwirkung bewirkten Verschweißungsvorgang sogar förderlich ist.

Alternativ kann auf eine echte Receiver-Releaseschicht mit dem Videoprinter ausgedruckt werden, die sich mit den PVC-Laminatschichten problemlos verbindet, also vorzugsweise ebenfalls aus PVC besteht und selbst auf einen Verarbeitungsträger aufgebracht ist, von dem sie dann wieder beim Verschweißen abgezogen wird.

Schließlich ist der Ausdruck auf eine PVC-Schicht in spiegelverkehrter Form möglich, so daß diese Schicht dann unmittelbar eine der Laminatschichten der Karte bildet, transparent ausgebildet ist und umgekehrt mit der in ihren Abmessungen schon fertigen Karte verbunden wird.

Eineletzte Möglichkeit besteht darin, direkt auf eine fertige Karte mit einem Videoprinter die erforderlichen Daten (Bild und Text) aufzubringen und die Karte dann entweder so zu belassen oder über den Aufdruck noch eine Deckschicht anzubringen.

Videoprinter-Druckverfahren sind für sich gesehen bekannt; sie können auch in vorteilhafter Weise in Farbe durchgeführt werden, wobei solche Druckverfahren, je nach Hersteller auch als sogenannte "Heiß-Transfer-Sublimierung" oder als "Thermal-Transfer-dye-Difusion" bezeichnet werden.

Die jeweils verfügbaren Videoprinter-Drucksysteme arbeiten gegebenenfalls mit speziellen, für das jeweilige System entwickelten Materialien, beispielsweise Farbbänder und spezielles Aufnahmepapier, wobei die Qualität je nach verwendetem Videoprinter und Druckverfahren mit Bezug auf die Aufbringung von Daten, aber auch Bildern u. dgl. hervorragend ist.

Zur Realisierung vorliegender Erfindung wird daher so vorgegangen, daß die gewünschten Daten beispielsweise mittels eines Videosystems (Videokamera mit zugeordnetem Bild/Textspeicher) aufgenommen oder in einen Personalcomputer (PC) oder einen sonstigen Rechner eingegeben werden, der mit einem Videoprinter zusammenarbeitet, wobei letzterer dann die Daten entsprechend der weiter vorn erwähnten Möglichkeiten ausdruckt.

Die Erfindung beruht also auf der Erkenntnis, anstelle irgendeines Papierausdrucks, der selbst wiederum nur eine Alternative zu dem möglichen Einlegen beispielsweise von Polaroid-Fotos oder sonstigen Angaben in das Kartenlaminat wäre, Daten direkt auf PVC mit Videoprinter zu drucken.

Der Ausdruck kann dabei erfolgen:
- auf eine opake, beispielsweise weiße Laminat-PVC-Schicht, die alternativ entweder die Oberschicht einer fertigen Karte ist, auf die gedruckt wird und die so belassen wird, wenn Abriebkriterien nicht kritisch sind oder die als Innenschicht mit einer weiteren Deckschicht versehen wird, ferner kann
- dem Videoprint-Verfahren vorlaufend auf die PVC-Schicht ein partielles oder komplettes Beschichtungsmittel als Empfängerschicht aufgebracht, und zwar vorzugsweise aufgedruckt werden, beispielsweise mittels Siebdruck oder Offsetdruck, indem man einen geeigneten Lack oder ein sonstiges Mittel aufbringt. Auf diese Empfänger(zwischen)schicht erfolgt dann das Ausdrucken der Daten mit dem Videoprinter. Ein partielles Aufbringen der Empfängerschicht dann nur im zu bedruckenden Bereich unter Freilassen der Randbereiche empfiehlt sich dann, wenn diese Empfängerschicht ein Verschweißen der beteiligten PVC-Laminatschichten erschwert. Läßt man daher die Randbereiche frei, ist dort ein einwandfreies Verbinden möglich.
   Ein komplettes Aufbringen oder Aufdrucken der Empfängerschicht für die Videoprinter-Daten kann dann vorgenommen werden, wenn diese sich mit PVC gut verbindet und das Verschweißen der den Kartenaufdruck bildenden PVC-Laminatschichten erlaubt bzw. begünstigt.
- Es kann auch auf eine dünne Receiver-/Releaseschicht mittels Videoprinter ausgedruckt werden. Die Dicke der Schicht kann beispielsweise 10 my betragen. Sie kann auf einem verarbeitungsträger, etwa aus Papier mit wesentlich größerer Dicke aufgebracht sein und kann aus PVC bestehen. Bei der weiteren Verarbeitung wird dann der Verarbeitungsträger von der dünnen, den Ausdruck tragenden Receiver-/Releaseschicht abgezogen und diese mit den Grundkartenlaminat-Schichten verschweißt, verbunden, beispielsweise auch verklebt. Dabei kann dann, wenn die Receiver-/Releaseschicht eine PVC-Schicht ist, auch auf dieser noch eine Empfängerschicht aufgedruckt sein, um die Datenaufnahme durch den Videoprinter zu verbessern, oder es ist auch möglich, diese Receiverschicht spiegelverkehrt mit den Videoprinter-Druckdaten zu versehen und dann, wenn sie transparent ist, mit der bedruckten Fläche auf Laminatgrundschichten aufzulegen/aufzukleben/ aufzuschweißen und den Verarbeitungsträger abzuziehen.
- Hiermit vergleichbar ist die Möglichkeit, eine auf Endmaß gestanzte fertige Karte dadurch mit einem Bild- und Text-Unterlaminat zu versehen, indem man auf eine transparente, dünne PVC-Folie spiegelverkehrt mittels Videoprinter die Daten ausdruckt, wobei diese PVC-Folie ebenfalls schon das fertige Endmaß aufweisen kann. Anschließend wird dann die fertige Grundkarte mit der umgekehrt daraufgelegten bedruckten PVC-Folie zusammen verbunden, so, wie dies die folgende Erläuterung in Verbindung mit der Zeichnung angibt, wobei, wie es sich versteht, dies nur eine, wenn auch die bevorzugte Möglichkeit darstellt, durch unmittelbares Bedrucken von PVC-Schichten Karten herzustellen. Die PVC-Folie hat dann ein beliebiges Innenmaß oder Fertigkarten-Endmaß.

In der Zeichnung ist schematisiert die Form 10 zur Verschweißung des Kartenaufbaus dargestellt; sie umfaßt eine obere Heizplatte 11, eine untere Heizplatte 12, die eigentliche, an die Randkanten des eingelegten Kartenlaminats seitlich anliegenden, Endmaß aufweisenden Formteile 13 sowie die bedruckte PVC-Folie 14, die Grundkarte 15 und ein Druckausgleichelement 16 vorzugsweise in Form einer Gummifolie. Hier kann auch eine flexible Stahlplatte verwendet werden, um einen absolut gleichmäßigen Druck beim Verschweißen zu erzeugen.

Auf die dünne PVC-Folie 14 ist also, um das Herstellungsverfahren nochmals zusammenzufassen, spiegelverkehrt unmittelbar der Datensatz (Bild, Variable) aufgebracht, beispielsweise mittels Videoprinter in hervorragender Farbqualität aufgedruckt, evt. nach Vorbereitung durch Sieb- oder Offsetdruck; durch das umgekehrte Auflegen der bedruckten PVC-Folie 14 befinden sich dann die Daten im Bereich 17 der Karte, also zwischen der PVC-Folie 14 und der Grundkarte 15, wobei die PVC-Folie 14 gleichzeitig die Deckplatte bildet. Auch die Grundkarte 15 ist aus PVC-Material, so daß die Verschweißung zu einem dann einstückigen Laminat problemlos möglich ist.

Eine bevorzugte Ausführungsform verwendet unmittelbar eine auf Endmaß gestanzte DIN-Karte, beispielsweise Kreditkarte u. dgl., also eine insofern fertige Karte, wobei dann Bild und Text als Unterlaminat verschweißt sind und der umgekehrte Bildträger gleichzeitig die schützende Deckschicht bildet. Die Dicke der PVC-Folie kann dabei 0,1 mm und die Dicke der Grundkarte, die mit der PVC-Folie zusammenverschweißt dann die endgültig fertige Karte bildet, etwa 0,7 mm betragen; diese Angaben sind fakultativ und schränken die Erfindung nicht ein.

Hier ist es auch möglich, innerhalb des Kartenmaßes nur teilweise zu heizen und zu pressen, z.B. mit Heizstempeln kleinerer Abmessungen zu arbeiten. Dies ist vorteilhaft bei PVC-Folie mit kleineren Außenmaßen wie die Karte, etwa wenn es sich nur um eine ein Bild tragende Folie handelt. Beim Verschweißen wird dann nur in diesem Teilbereich der Karte gearbeitet (also partiell) und dort, wo eventuell schon Reliefbeschriftung vorhanden ist, sind Aussparungen oder Gummistempel in der Schweißform angeordnet. Man kann beim Heißpressen von Photo-PVC-Folienausschnitten auch eine Linienmusterung des Stempels verwenden, so daß Randbereiche der Teilfolie völlig unmerklich übergehen und in diesem Linienmuster sozusagen "untergehen".

Erfolgt der Videoprinter-Ausdruck auf eine dünne Zwischenträgerschicht oder eine sogenannte Receiver/Release-Schicht mit einer Dicke von beispielsweise nur 10µ , dann kann diese selbst wieder auf einen Verarbeitunsträger (Papier; 0,2 mm dick) aufgebracht sein. Man kann dann nach entsprechendem Aufbringen der dünnen Receiver-, also Aufnahmeschicht mit den aufgedruckten Daten den Verarbeitungsträger von der Schicht wieder abziehen, die dann in entsprechender Weise auf der Grundkarte haftet und mit dieser ebenfalls verschweißt ist. Im letzteren Fall der dünnen Receiver-Schicht kann diese auch mit der Grundkarte verklebt werden. Beiden Ausführungsformen ist das vorteilhafte, spiegelverkehrte Aufdruckverfahren mittels eines Videoprinters in Farbe gemeinsam.

Diese Schichten sind mit derGrundkarte unlösbar verbunden, wobei sie gleichzeitig den Datenträger und die Abdeckschicht bilden. Es versteht sich dabei, daß sich die auf die jeweilige Schicht aufgedruckten Daten, Mitteilungen und Bilder dann zwischen den Schichten, also zwischen den einander zugewandten Flächen der Grundkarte und der auf diese aufgebrachten PVC-Schicht oder Receiver-Schicht befinden und damit auch vollkommen fälschungssicher sind.

Eine vorteilhafte Ausgestaltung besteht schließlich noch darin, daß der Videoprinter in seinen Eigenschaften so ausgebildet ist, daß er selbst die erforderliche Zwischenoder Receiverschicht aufbringt, also z.B. als zusätzliche "Farbschicht" sozusagen entweder enthält oder in einen separaten zusätzlichen Durohlauf aufbringt. Diese Videoprinter-Haftungs/Übertragungsschicht kann sehr dünn, gegebenenfalls transparent sein und nur dort aufgebracht werden, wo vom Videoprinter Daten und/oder Abbildungen (Photos) auf die Karte gedruckt werden.

## Patentansprüche

1. Verfahren zum Aufbringen und gleichzeitigen Versiegeln von Informationen, Daten, Abbildungen u.dgl. auf kartenförmigen Informationsträgern, Identifikationskarten, Kreditkarten, Auslandskarten u.dgl. aus Vollkunststoffmaterial, bei denen die einzelnen Schichten als Laminat übereinander angeordnet und miteinander verbunden sind, wobei mittels eines für sich gesehen bekannten Videoprinters Daten und/oder Abbildungen direkt auf eine der den Informationsträger bildenden Kunststoff-Laminatschichten aufgedruckt werden, dadurch gekennzeichnet, daß
a) anschließend die Verbindung der bedruckten Kunststoffschicht mit der oder den restlichen Laminatschicht(en) durch Verschweißen erfolgt, wobei
b) als restliche Laminatschicht(en) eine bereits auf Endmaß gebrachte Karte verwendet wird und
c) die auf Endmaß gestanzte fertige Karte als Unterlaminat mit der ebenfalls schon Endmaß aufweisenden, die aufgedruckten Daten und/oder Abbildungen enthaltenden Kunststoffschicht dadurch verschweißt wird, daß beide Schichten in Endmaß aufweisende Formteile einer Verschweißungsform eingelegt und miteinander laminiert werden.

2. Verfahren nach Anspruch 1, dadurch gekennzeichnet, daß zwischen einer oberen und einer unteren Heizplatte der Verschweißungsform die Endmaß aufweisenden Formteile mit Grundkarte der aufzulaminierenden bedruckten Kunststoff-schicht und einem Druckausgleichselement angeordnet werden.

3. Verfahren nach Anspruch 1 oder 2, dadurch gekennzeichnet, daß die Daten und/oder Abbildungen auf die Deckschicht der Karte aufgedruckt werden.

4. Verfahren nach Anspruch 1 oder 2, dadurch gekennzeichnet, daß die Daten und/oder Abbildungen auf eine opake (weiße) Kunststoff-Innenschicht des Laminats aufgedruckt werden, auf die eine Deckschicht aufgebracht wird.

5. Verfahren nach Anspruch 1, dadurch gekennzeichnet, daß die Daten und/oder Abbildungen mit dem Videoprinter unmittelbar auf eine fertige Karte aufgedruckt werden.

6. Verfahren nach Anspruch 1 oder 2, dadurch gekennzeichnet, daß die Daten und/oder Abbildungen auf eine dünne Kunststoff-Receiver-/Releaseschicht aufgedruckt werden, die auf einem dickeren Verarbeitungsträger aufgebracht ist.

7. Verfahren nach einem der Ansprüche 1 bis 6, dadurch gekennzeichnet, daß die zu bedruckende Kunststoffschicht oder die Kunststoff-Receiver-/Releaseschicht eine PVC-Schicht ist, wobei die Kunststoff-Receiver-/Releaseschicht zur Einbringung in das PVC-Laminat der Karte von ihrem Verarbeitungsträger abgezogen und in die Karte eingebracht wird.

8. Verfahren nach einem der Ansprüche 1 bis 7, dadurch gekennzeichnet, daß vor dem Aufdrucken der Daten und/oder Abbildungen auf die zu bedruckende Kunststoffschicht auf diese lediglich partiell im zu bedruckenden Bereich oder vollständig deckend eine Empfängerzwischenschicht aufgebracht wird.

9. Verfahren nach Anspruch 8, dadurch gekennzeichnet, daß die Empfängerzwischenschicht ein Lack oder eine mittels Druckverfahren aufgebrachte Druckschicht ist, die eine einwandfreie Verbindung zum PVC-Material herstellt und die vom Videoprinter aufgebrachten Daten aufnimmt.

10. Verfahren nach einem der Ansprüche 1 bis 9, dadurch gekennzeichnet, daß bei guten Verbindungseigenschaften der Empfängerschicht mit den angrenzenden PVC-Schichten die Empfängerschicht die Randseiten umfassend vollständig deckend aufgebracht wird.

11. Verfahren nach Anspruch 6, dadurch gekennzeichnet, daß die vom Verarbeitungsträger getragene dünne Receiver-/Releaseschicht unter Zwischenfügung einer Klebstoffschicht oder eines Klebmittels auf eine Grundkartenform aufgelegt, mit dieser verbunden und die Verarbeitungsträgerschicht abgezogen wird.

12. Verfahren nach einem der Ansprüche 1 bis 11, dadurch gekennzeichnet, daß die dünne Daten und/oder Abbildungen tragende PVC-Folie ein gegenüber der Karte geringeres Innenmaß aufweist und nur in derem Bereich eine Heißpressung zum Verschweißen vorgenommen wird unter Freilassung der restlichen Kartenbereiche.

13. Verfahren nach Anspruch 12, dadurch gekennzeichnet, daß die Heißpressung mit einem Linienmuster des geheizten (partiellen) Druckstempels erfolgt.

## Claims

1. A method for the application and simultaneous sealing of information, data, images and the like on to card-type information carriers, identification cards, credit cards, cards for use abroad and the like made of a solid plastics material, the individual layers in the said information carriers and cards being arranged one on top of the other as a laminate and combined with one another, wherein, by means of a video printer known per se, data and/or images are printed directly onto one of the plastics-material laminate layers forming the information carrier, characterised in that
a) the printed plastics-material layer is then combined with the remaining laminate layer(s) by bonding, wherein
b) a pre-sized card is used as the remaining laminate layer(s) and
c) the finished card punched to size, as a sublaminate with the likewise pre-sized plastics-material layer containing the printed data and/or images, is bonded in that the two layers are placed into pre-sized bonding-mould parts and laminated together.

2. A method according to Claim 1, characterised in that, together with a base card of the plastics-material layer to be laminated and a pressure-compensation element, the pre-sized moulded parts are arranged between an upper and a lower hot plate of the bonding mould.

3. A method according to Claim 1 or 2, characterised in that the data and/or images are printed onto the outer layer of the card.

4. A method according to Claim 1 or 2, characterised in that the data and/or images are printed onto an opaque (white) plastics-material inner layer of the laminate and an outer layer applied to the said inner layer.

5. A method according to Claim 1, characterised in that the data and/or images are printed directly onto a finished card with the video printer.

6. A method according to Claim 1 or 2, characterised in that the data and/or images are printed onto a thin plastics-material receiver/release layer, which is applied to a thicker processing layer.

7. A method according to one of Claims 1 to 6, characterised in that the plastics-material layer to be printed or the plastics-material receiver/release layer is a layer of PVC, wherein the plastics-material receiver/release layer is withdrawn from its processing carrier in order to be introduced into the PVC laminate of the card, and introduced into the card.

8. A method according to one of Claims 1 to 7, characterised in that, before the data and/or images are printed onto the plastics-material layer to be printed, a receiving intermediate layer is applied to the said layer only partially within the area to be printed or completely covering a receiving intermediate layer.

9. A method according to Claim 8, characterised in that the receiving intermediate layer is a lacquer or a print layer applied by means of a printing method, the said print layer producing a perfect combination with the PVC material and taking up the data applied by the videoprinter.

10. A method according to one of Claims 1 to 9, characterised in that, if there are good bonding properties of the receiving layer with the abutting PVC layers, the receiving layer is applied as a complete cover so as to include the edges.

11. A method according to Claim 6, characterised in that the thin receiver/release layer carried by the processing carrier is laid on to a base card form with addition of an intermediate adhesive layer or of an adhesive substance, combined with the said base card form, and in that the processing carrier layer is withdrawn.

12. A method according to one of Claims 1 to 11, characterised in that the thin PVC film carrying data or images has a smaller inner dimension than the card, and in that hot-press bonding is performed only within the area of the inner dimension while leaving out the remaining areas of the card.

13. A method according to Claim 12, characterised in that the hot-pressing takes place with a line pattern of the heated (partial) pressure stamp.

## Revendications

1. Procédé d'application et de scellement simultané d'informations, de données, d'illustrations et analogues, sur des supports d'information en forme de carte, des cartes d'identification, des cartes de crédit, des cartes pour l'étranger et analogues, réalisées en un matériau totalement synthétique, pour lequel les différentes couches sont disposées les unes au-dessus des autres sous forme de laminés et sont reliées ensemble, où, au moyen d'une imprimante vidéo, connue en soi, des données et/ou des illustrations sont directement imprimées sur l'une des couches de laminé en matière synthétique, constituant le support d'informations, caractérisé en ce que
• la liaison de la couche de matière synthétique imprimée à la couche ou aux couches restante(s) du laminé est effectuée par soudage,
• une carte déjà amenée à la cote finale est utilisée comme couche(s) de laminé restante (s),
• la carte terminée estampée à la cote finale, à titre de sous-laminé, est soudée à la couche de matière synthétique présentant également déjà la cote finale, contenant les données et/ou les illustrations imprimées, par le fait que les deux couches sont insérées et laminées ensemble dans des parties d'un moule de soudage à la cote finale.

2. Procédé selon la revendication 1,
caractérisé en ce que
entre une plaque de chauffage supérieure et une plaque de chauffage inférieure du moule de soudage, les parties de moule présentant la cote finale sont constituées d'une carte de base de la couche en matière synthétique imprimée à laminer et d'un élément d'égalisation de pression.

3. Procédé selon la revendication 1 ou 2,
caractérisé en ce que
les données et/ou les illustrations sont imprimées sur la couche de couverture de la carte.

4. Procédé selon la revendication 1 ou 2,
caractérisé en ce que
les données et/ou les illustrations sont imprimées sur une couche intérieure en matière synthétique, opaque (blanche) du laminé, sur laquelle est appliquée une couche de couverture.

5. Procédé selon la revendication 1,
caractérisé en ce que
les données et/ou les illustrations sont imprimées, à l'aide de l'imprimante vidéo, directement sur une carte terminée.

6. Procédé selon la revendication 1 ou 2,
caractérisé en ce que
les données et/ou les illustrations sont imprimées sur une couche mince de réception/libération en matière synthétique, qui est appliquée sur un support de façonnage plus épais.

7. Procédé selon l'une des revendications 1 à 6,
caractérisé en ce que
la couche de matière synthétique ou la couche de réception/libération en matière synthétique est une couche de PVC, la couche de réception/libération en matière synthétique étant extraite de son support de façonnage pour introduction dans le laminé en PVC de la carte et étant insérée dans la carte.

8. Procédé selon l'une des revendications 1 à 7,
caractérisé en ce que,
avant l'impression des données et/ou des illustrations sur la couche de matière synthétique à imprimer, une couche intermédiaire réceptrice est appliquée sur celle-ci, de façon seulement partielle dans la zone à imprimer ou bien en donnant une couverture complète.

9. Procédé selon la revendication 8,
caractérisé en ce que
la couche intermédiaire réceptrice est un vernis ou une couche d'impression appliquée au moyen d'un procédé d'impression qui établit une liaison parfaite avec le matériau PVC et qui reçoit les données appliquées par l'imprimante vidéo.

10. Procédé selon l'une des revendications 1 à 9,
caractérisé en ce que,
dans le cas où l'on a de bonnes propriétés de liaison de la couche réceptrice avec les couches PVC limitrophes, la couche réceptrice est appliquée en couvrant complètement et en entourant les côtés de bordure.

11. Procédé selon la revendication 6,
caractérisé en ce que
la couche de réception/libération mince portée par le support de façonnage est appliquée avec insertion d'une couche d'adhésif ou d'un adhésif sur une forme de carte de base, est liée à celle-ci, et le support de façonnage est enlevé.

12. Procédé selon l'une des revendications 1 à 11,
caractérisé en ce que
la feuille en PVC mince, portant les données et/ou les illustrations, présente une cote intérieure plus petite que la cote de la carte, et un pressage à chaud de soudage n'étant effectué que dans cette zone, le reste de la carte étant laissé libre.

13. Procédé selon la revendication 12,
caractérisé en ce que
le pressage à chaud est effectué au moyen d'un motif à lignes du poinçon de pressage (partiel) chauffé.
